Europäisches Patentamt

European Patent Office

Office européen des brevets

(19)

(11) EP 1 026 475 A1

(12) EUROPEAN PATENT APPLICATION

(43) Date of publication:
09.08.2000 Bulletin 2000/32

(51) Int Cl.⁷: G01B 11/24

(21) Application number: 99300867.1

(22) Date of filing: 05.02.1999

(84) Designated Contracting States:
AT BE CH CY DE DK ES FI FR GB GR IE IT LI LU MC NL PT SE
Designated Extension States:
AL LT LV MK RO SI

(71) Applicants:
• FUJIKURA LTD.
Kohtoh-ku Tokyo (JP)
• Takikawa Engineering Co., Ltd.
Hachioji-shi, Tokyo (JP)

(72) Inventors:
• Ikegami, Masahiro, Fujikura Ltd.
Sakura-shi, Chiba-ken (JP)
• Takikawa, Katsunobu
Hachioji-shi, Tokyo (JP)

(74) Representative: Calderbank, Thomas Roger et al
MEWBURN ELLIS
York House
23 Kingsway
London WC2B 6HP (GB)

(54) **Optical fiber curvature measuring apparatus and correction method thereof**

(57) The present invention is an optical fiber curvature measuring apparatus which radiates the side surface of an optical fiber 10 with parallel optical beams 21,22, and calculates the optical fiber curvature based on the interval between the reflected beams 21', 22'. This apparatus is provided with an optical source 18 which emits said optical beams, a receiver 28 which receives said reflected beams, a calculation apparatus 2 which performs computation on the signal from said receiver, an output apparatus 2a which outputs the result of the calculation of the calculation apparatus, and an input apparatus which inputs data to said calculation apparatus. Said input apparatus inputs a threshold value of the optical intensity of said reflected beams to said calculation apparatus. In addition, said calculation apparatus compares the measured values of said reflected beams with said threshold value based on said signal, and finds the intervals of the above measured values corresponding to said threshold values, and based on this interval calculates the curvature of said optical fiber, outputs the result to said output apparatus.

FIG.1

EP 1 026 475 A1

**Description**

The present invention relates to an apparatus for measuring the curvature of an optical fiber, and an optical system correction method therefor.

Depending on the conditions at the time of manufacture, etc., bare fibers will have a slight curvature. This curvature can be corrected by coating process, and the visible curvature can be eliminated. However, when optical fibers are connected together, problems are caused by this curvature. For example, in fusion splicing, the coating (plastic jacket) at the end of the optical fiber is removed along a pre-determined length, and the end portions of the exposed bare fibers (glass portions) are abutted and spliced, but in this case, if there is curvature in the exposed part of the optical fiber, the axes of the fibers to be spliced do not precisely align, and connection loss is produced originated from axial or angular deviation. In addition, when the optical fiber is mounted in an optical connector ferrule, there are cases where the end of the fiber cannot be smoothly inserted into the hole of the ferrule.

Thus, it is necessary to control the amount of curvature of the fiber. In particular, when connecting optical fibers on-site, it is necessary to determine whether the cause of splice failure is the connection apparatus, unskilled workmanship, or the curvature of the fiber when the connection loss exceeds a tolerance value.

In consideration of the above, it is the object of the present invention to provide a fiber curvature measuring apparatus which, in particular, can be easily used on-site, obtains a stable measurement result, and further has an easily correctable optical system.

The present invention is an optical fiber curvature measuring apparatus which radiates parallel optical beams to the side surface of the fiber, and measures the curvature of the fiber based on the interval of reflected beams. The optical fiber curvature measuring apparatus is provided with an optical source which emits the optical beams, a receiver which receives the reflected beams, a calculation apparatus which performs the computation on the signal from the receiver, an output apparatus which outputs the result of the calculation of the calculation apparatus, and an input apparatus which inputs the data to the calculation apparatus, and characterized in this input apparatus inputting the threshold value of the optical intensity of the reflected beams into the calculator apparatus, and the calculator apparatus finding the intervals of the intersections between the measured values corresponding to the threshold value by comparing the measured value of the reflected beams along a fixed direction based on the signal to the threshold value, and based on this interval, outputs the curvature of the optical fiber and outputs the same to the output apparatus.

It is preferable that the optical fiber rotate on its axis of rotation, and based on the largest value of the intervals found at that time, the curvature of the optical fiber be calculated. In addition, it is further preferable that there be two optical beams radiated to the side surface of the optical fiber. In this case, the calculation apparatus determines there has been a measurement error when there are other than four of the observation values corresponding to the threshold value.

In addition, it is preferable that the content output to the output apparatus is at least the observation value, the threshold value, and the curvature of the optical fiber.

In addition, it is preferable that at each peak of the measured value, the intermediate value between the intersection of the peak and the threshold value be used as the standard value, and that the interval between these standard values be used as the interval of the intersection between the measured value and the threshold value.

In addition, it is preferable that in the calculation apparatus, it is possible to automatically set the threshold value based on the largest value or average value of the measured value,

In addition, it is preferable that the width of the optical beams along the radial direction of the spot diameter of the optical fiber be equal to or greater than the range of possible movement along the radial direction of the optical fiber so that width vibration of the optical fiber is covered when the optical fiber is rotated on its axis of rotation at least in the position at which the optical beams of the optical fiber are radiated.

It is further preferable that the crow-section of the spot diameter of the optical beams along the radial direction be flat in the position at which the optical beams radiate the optical fiber, and that its lengthwise axis be go along the radial direction of the optical fiber.

In addition, it is possible to use for the optical beams, for example, a semiconductor laser or a helium-neon laser.

Furthermore, a first lens between the optical source of the optical beam and the optical fiber is provided, a second lens between the optical fiber and the receiver is provided, and the cross-section along the radial direction of the optical beam is flattened by the first lens, and the reflected light form the optical fiber be converged by the second lens, and focused on the receiver.

In this case, it is preferable that the first lens be a concave cylindrical lens, and the second lens be a convex cylindrical lens.

In addition, the optical fiber curvature measuring apparatus according to the present invention can be provided with a holder which retains the optical fiber in the measurement space formed in the interior of the apparatus. This holder has passage holes through which the optical fiber passes, and the passage hole communicates vertically through the upper surface of the apparatus and the measurement space, and thereby the optical fiber is inserted perpendicularly into the measurement space from the upper surface of the apparatus.

Here, it is preferable that the diameter of the passage hole on the side of the measurement space be larger than the diameter of above bare fiber, and smaller than the diameter of coating portion of the optical fiber, and that the diameter on the side of the upper surface of the apparatus be larger than the diameter of the coating portion.

It is further preferable that the optical fiber retained in the holder be rotatable on its axis of rotation.

In addition, the present invention also relates to a correction method for an optical fiber curvature measuring apparatus radiating an optical beams parallel to the side surface of the optical fiber, and measuring the curvature of the optical fiber based on the interval of the reflected beams. Possible correction methods include, for example, a method wherein the interval of the reflected beams, when the optical beam is radiated to a flat mirror or a straight optical fiber, is electronically converted, and the these intervals are used as the intervals when the curvature is 0.

Additionally, a graduated measure is placed vertically with respect to the optical path from the optical source to the optical fiber, confirms the degree of parallelness by measuring the interval between the optical beams while moving this measure along the optical beams, and when the optical beams are not parallel, adjusts the emission angle of the optical source and the optical system that the optical beam transit, and makes the optical beams parallel.

In the drawings

Fig. 1 explains the principle of the optical fiber curvature measurement method in the apparatus of the present invention.

Fig. 2 explains the principle of the optical fiber curvature measurement method in the apparatus of the present invention.

Fig. 3 shows an example of the apparatus of the present invention.

Fig. 4A is a transverse view along the line $X_1$ - $X_1$ in Fig. 4B showing an example of the structure of the measurement section in the apparatus of the present invention.

Fig. 4B is a vertical view along the line $X_2$ - $X_2$ in Fig. 4A showing an example of the structure of the measurement section in the apparatus of the present invention.

Fig. 5 shows an example of the waveform showing the measured values of the reflected beams in the apparatus of the present invention, and the method of calculating the intervals between the intersections of this measured value and the threshold value.

Fig. 6 shows an example of the deformation method of the cross-section of the optical beam in the apparatus of the present invention.

Fig. 7 shows an example of the form of the holder used in the apparatus of the present invention.

Fig. 8 shown an example of the waveform of the holder using the apparatus of the present invention.

Fig. 9 shows an example of the use condition of the measuring implement used in the apparatus of the present invention.

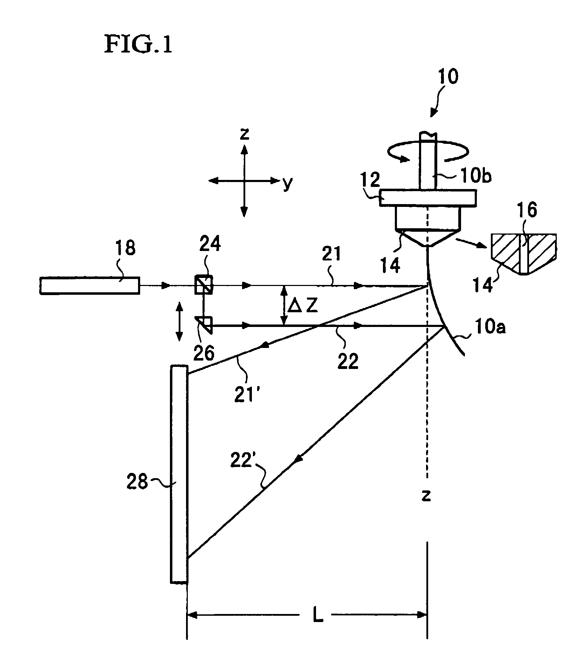

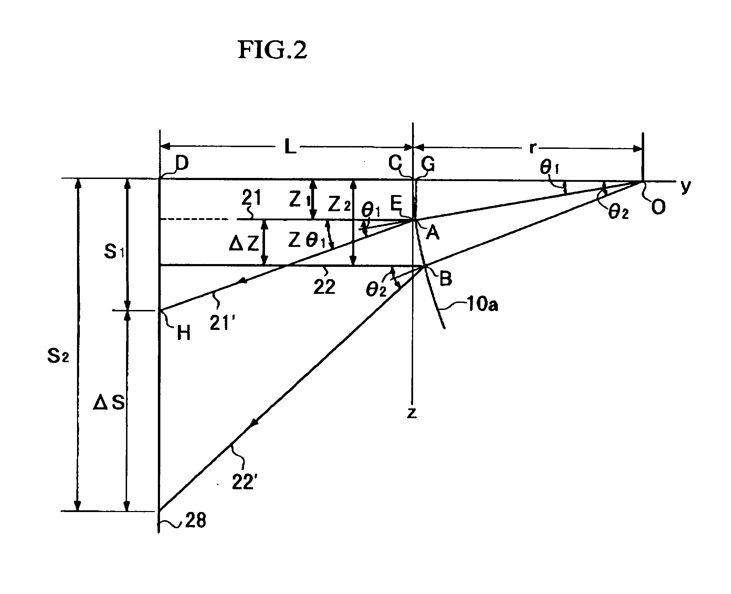

Before explaining the embodiments, the principle of the optical fiber curvature measurement method in the apparatus of the present invention will be explained referring to Fig. 1 and Fig. 2. This principle has been patented in Japanese Patent, No. 265241, "Curvature Measurement Method for an fiber strand, and will be explained in order to simplify understanding of the present invention.

Reference number 10a is a bare fiber (glass portion of an optical fiber 10), and is composed by removing a coating 10b from the optical fiber 10. In addition, this length is of such a degree that the free end does not distort due to dead weight. This length is generally 7 ~ 8 cm. Reference number 12 is the rotating stage which rotates centered on the perpendicular z-axis, and on the rotating stage the holder 14 which clamps the optical fiber 10 is anchored. In the holder 14, a hole 16 is formed on the same axis as the rotating stage, and in this hole 16, one end of the optical fiber 10 is rotatably held centered on the z-axis.

Reference number 18 is the optical source, and, for example, a semiconductor laser or a helium-neon laser can be used. The optical source 18 radiates to the optical fiber 10 an optical beam 21 perpendicular to the z-axis and parallel to the y-axis. In addition, from the optical beam 21, a parallel beam 22 is split by a beam splitter 24 and a prism 26, and separated from optical beam 21 by the interval ΔZ. The prism 26 is movable in the direction of the z-axis, and the above interval ΔZ is adjustable.

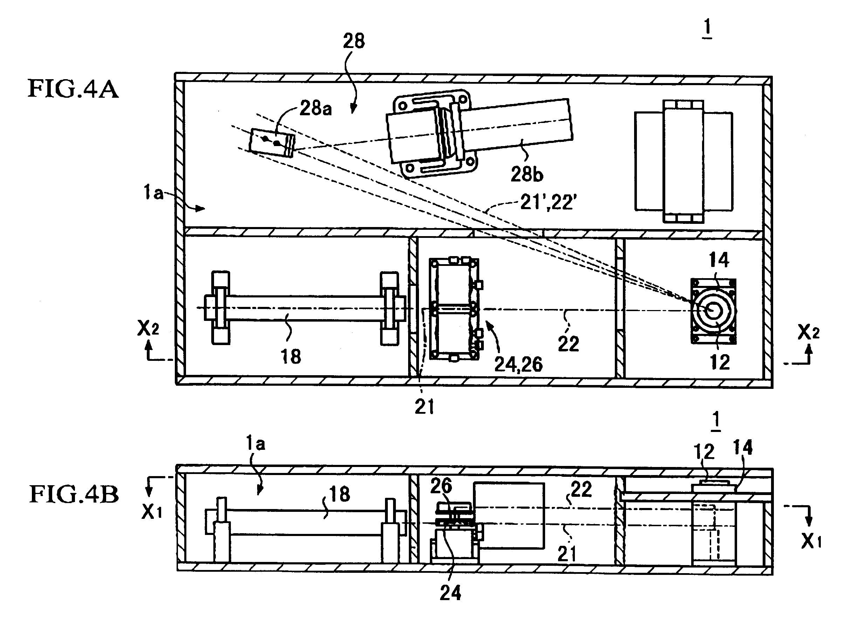

Reference number 28 is a receiver which receives the reflected beams 21' and 22' obtained by reflecting the optical beams 21 and 22 on the optical fiber 10. For the receiver 28, an image sensor such as a CCD line sensor can be used. Or as shown in Fig. 4A described below, the reflected light 21' and 22' projected on the screen 28a can also on photographed by the CCD line sensor 28b. The receiver 28 is along the z-axis at a position separated from the z-axis only by a distance L in the y-axis direction, and installed with its light-receiving surface facing the z-axis.

When making a measurement, while the optical fiber 10 held in the holder 14 is rotated, optical beams 21 and 22 radiate the optical fiber 10, and the largest value of the interval ΔS measured at the optical image sensor 28 along the z-axis of the reflected beams 21' and 22' from the optical fiber 10 is found.

In addition, the above L, ΔZ, and ΔS are substituted into the following equation 1, and the curvature 1 / r is calculated:

$$\text{Eq. 1} \qquad 1/r = 1/2L(\Delta S - 1/\Delta Z)$$

In addition, the interval $\Delta S$ changes with the rotation of the optical fiber 10. That is, the interval $\Delta S$ is largest when the curved end of the optical fiber 10 comes opposite to the image sensor 28, which is to say, when the optical fiber 10 overlaps the zy-plane in Fig. 2. In addition, at this time, the center O of the curvature of the curved optical fiber 10 is positioned on the y-axis (see Fig. 2).

Moreover, equation 1 is calculated in the following sequence.

When the interval $\Delta S$ is greatest, in Fig. 2, the following two equations are hold:

$$\tan \theta_1 = CE / OC = Z_1 / r$$

$$\tan \theta_2 = HF / AF = HF / CD + GC = S_1 - Z_1 / L + (r - r\cos \theta_1)$$

Furthermore, by the law of sines,

$$S_1 - Z_1 / L + (r - r \cos \theta_1) = 2Z_1 / r // 1 - (Z_1 / r)^2,$$

approximating $(r - r \cos \theta_1) \cong 0$, when $r_2 \gg Z_2$, and then

$$S_1 = (1 + 2L / r)Z_1.$$

In addition, because this is the same for $S_2$ as well,

$$\Delta S = S_2 - S_1 = (1 + 2L / r) (Z_2 - Z_1) = (1 + 2L / r) \Delta Z,$$

giving Eq. 1 from this.

Preferred Embodiment 1

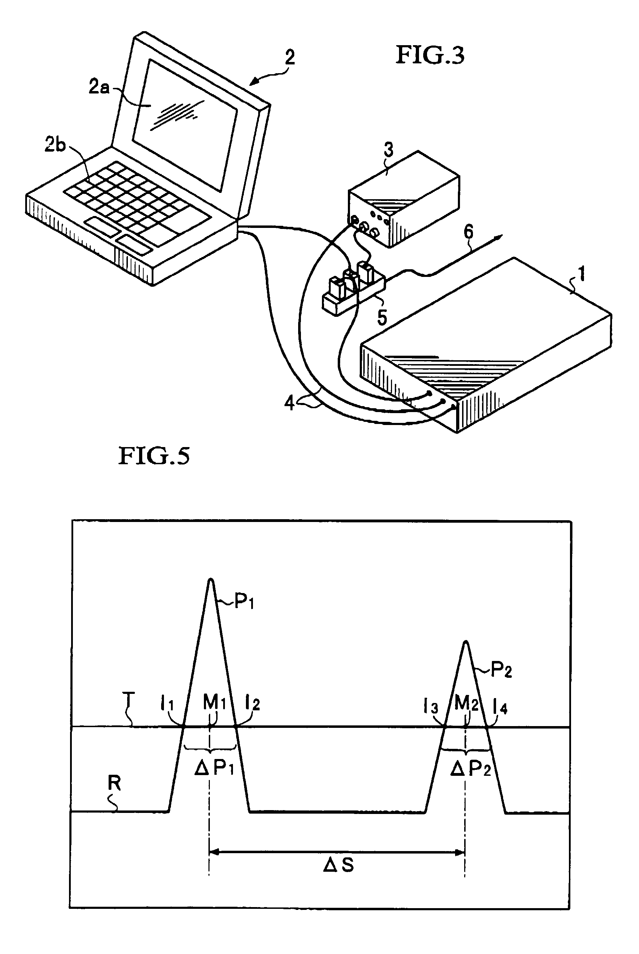

Next, an embodiment of the optical fiber curvature measuring apparatus employing the above principle will be explained. The embodiment of the optical fiber curvature measurement apparatus is shown in Fig. 3. Reference number 1 is a measurer, and in the measurement space formed therein, as shown in Fig. 4A and 4B, the measurer 1 is provided with a beam splitter 24, a prism 26, and an receiver 28. In addition, on the upper part of the measurer 1, the holder 14 shown in Fig. 1 is installed, and via the passage hole (not shown in the figure) formed in the holder 14, the outside and the above measurement space 1a are connected vertically.

Reference numeral 2 is a calculation apparatus which processes computation of the signals from the receiver 28. The calculation apparatus is provided with a display (output apparatus) 2a which automatically outputs the result of calculations, and a key board (input apparatus) 2b which inputs data to the calculation apparatus. For the calculation apparatus 2, a portable computer can be used. Reference numeral 3 is an electrical power apparatus for the optical source 18, and the measurer 1, the calculation apparatus 2, and the electrical power apparatus 3 are connected by various cords 4. In addition, reference numeral 5 is a power source supplying power to the measurer 1, the calculation apparatus 2, and the power source apparatus 3.

When measurements are made, the optical fiber 10 is inserted into the upper part of the passage hole 16, and the optical fiber 10 is lowered perpendicularly into the above measurement space 1a. Next, the holder 14 is rotated along with the rotation stage centered on the z-axis, optical beams 21 and 22 are emitted, the image sensor 28 receives the light, the measured value of the reflected light 21' and 22' along the z-axis is electronically processed by the calculation apparatus 2, and displayed on the display 2a as a graph.

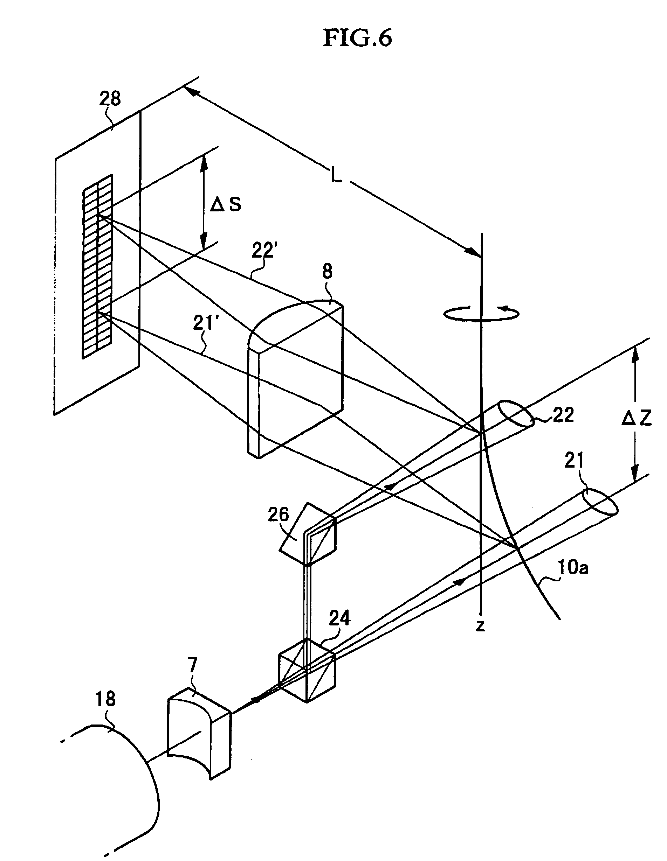

This condition is shown in Fig. 5. Because there are two optical beams 21 and 22 emitted from the optical source 18, the in graphically displayed measured value (reference letter R in Fig. 5) as well, two peaks shown by $P_1$ and $P_2$ are formed. In addition, the detection of the reflected beams 21' and 22' is carried out by inputting into the

EP 1 026 475 A1

calculation apparatus 2 the optical intensity which is the threshold value T, and in the calculation apparatus 2, compares the measured value R with the threshold value T. In the case of Fig. 5, peaks $P_1$ and $P_2$ exceed the threshold value T. Therefore, these peaks $P_1$ and $P_2$ are recognized in the calculation apparatus 2 as the reflected beams 21' and 22', and the interval between the intersections $I_1$ and $I_2$ of the measured value R and the threshold value T in peak $P_1$ and the intersections $I_3$ and $I_4$ of the measured value R and the threshold value T in peak $P_2$ is recognized as the interval $\Delta S$ between the reflected beams 21' and 22'.

In addition, when there are two optical beams 21 and 22 emitted from the optical source 18, usually two peaks $P_1$ and $P_2$ shown in Fig. 5 are formed as the measured values, and as a result, the there are four intersections between the measured value R and the threshold value T on the display 2a, shown as $I_1 \sim I_4$. Thus, when there are more than 4 intersections between the measured value R and the threshold value T because the reflected waveform is degraded, the calculation apparatus 2 detects a measurement error, and performs the measurement again.

Then the optical fiber 10 is rotated centered on the z-axis, and the calculation apparatus 2 calculates the greatest value of the interval $\Delta S$ between the intersections $I_1$ and $I_2$ of the measured value R and the threshold value T in peak $P_1$ and intersections $I_3$ and $I_4$ of the measured value R and the threshold value T in peak $P_2$, and based on this greatest value, using the above Eq. 1, the curvature of optical fiber 10 is calculated. In this case, actually, in each peak $P_1$ and $P_2$, the intersections between the measured value R and the threshold value T have the width shown as $\Delta P_1$ and $\Delta P_2$ in Fig. 5. Thus, the intermediate values $M_1$ and $M_2$ of $\Delta P_1$ and $\Delta P_2$ are used as the standard value, and the interval of this standard value is used as the interval $\Delta S$ of the intersections between the measured value R and the threshold value T.

When the curvature 1/r of the optical fiber 10 calculated by the above procedure appears on the display 2a, the desired object has been obtained. However, in order to confirm the condition of the reflected light R, and ascertain the cause when the connection loss exceeds a tolerance value, or in order to confirm the accuracy of the measurement value, in addition to the curvature 1 / r of the optical fiber 10, it is desirable that the waveform of the measured value R and the threshold value T be displayed together, as shown in Fig. 5. In addition, while the threshold value T can be input form a keyboard by a worker, it can also be set automatically in the calculation apparatus 2 based on the greatest value of the optical intensity of the measured value R. In addition, the largest value and the average value can be automatically calculated in the calculation apparatus 2.

However, it is necessary that, at least at the position which the optical beams 21 and 22 radiate the optical fiber 10, the width of the optical beams 21 and 22 emitted from the optical source 18 along the radial direction of the optical fiber 10 have a greater range of motion (the width of the vertical vibration of the optical fiber 10) along the radial direction of the optical fiber 10 when rotating the optical fiber 10 centered on the z-axis. As one example of this case, the cross-section along the radial direction of the optical fiber 10 of the beam diameter of the optical beams 21 and 22 is flattened at least at the above radiation position, and its longitudinal axis is made parallel to the radial direction of the optical fiber 10. Here, as a factor of the vertical vibration of the optical fiber 10, there are the curves of the optical fiber 10, the gap between the optical fiber 10 and the passage holes 16, the shaking during rotation of the optical fiber 10, etc.

In addition, in flattening the cross-section of the optical beams 21 and 22, the optical beams 21 and 22 having a flat cross-section can be emitted from the optical source 18. For example, in optical source 18, there is light such as a helium-neon tube or a semi-conductor laser, etc., which can be visually inspected, but because generally their emitted beam diameter is flat, even if they do not transit an optical system in particular, it is possible to obtain flat optical beams 21, 22 which have the desired width. However, when the beam diameter is insufficient, or when among the semiconductor lasers, not a end face light emitting type laser which emits a beam having a flat cross-section, but vertical cavity surface emitting laser having a beam with a true circular cross-section is used, as shown for example in Fig. 6, by using an optical means, it is necessary to flatten the cross-section of optical beams 21, 22 between the light source 18 and the optical fiber 10.

In the example shown in Fig. 6, between the optical source 18 and the beam splitter 24, a first lens 7 is provided, and the cross-section along the radial direction of the optical beams 21 and 22 is flattened by the first lens 7, and the optical fiber 10 radiated. However, there are cases wherein the amount of the reflected light 21', 22' of the flat beam detected by the receiver 28 is lowered due to further degradation by the optical fiber 10 in the direction of flattening, and a clear peak becomes difficult to detect. Here, a second lens 8 is provided between the optical fiber 10 and the receiver 28, and the strength of the reflected beams 21' and 22' from the optical fiber 10 are increases by being converged by the second lens 8, and focussed on the receiver 28. In addition, as the first lens 7, a concave cylindrical lens, for example, can be used, and as the second lens 8, a convex cylinder lens, for example, can be used. These lenses 7, 8 enlarge or shrink the diameter of the optical beam along the radial direction of the optical fiber 10, but on the optical beam diameter along the short axis, that is, in the longitudinal direction of the optical beam, there is almost no influence.

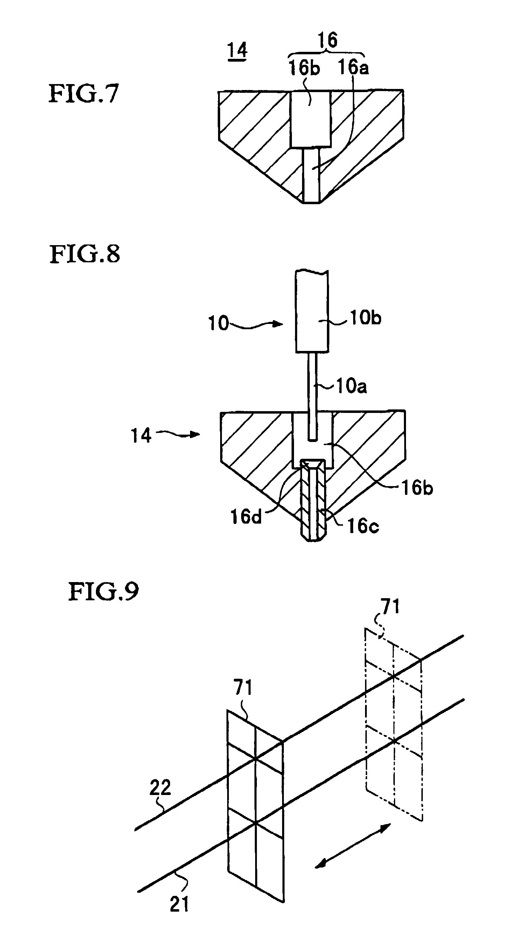

Fig. 7 shows schematically the structure of the holder 14. In this example, in the passage hole 16 formed in the holder 14, the lower end (the measurement space side) has a small diameter part 16a with a larger diameter than

5

the diameter of the bare fiber 10a (i.e., approximately of 125 μm), and with a smaller diameter than the coating portion of the optical fiber 10 (i.e., approximately of 250 μm), and the upper side (the upper surface of the measurer 1) has a large diameter part 16b with a larger diameter than the coating portion of the optical fiber 10. In this case, the downward movement of the coating portion is blocked by the small diameter part 16a, and only the optical fiber 10 is exposed within the measurement space. At the same time, because the coating is supported on its perimeter by the large diameter part 16b, the stability of the optical fiber 10 in the passage hole 16 is increased. Therefore, when making a measurement, a stabilizer such as a fastener is not used, and it is possible to carry out positioning of the optical fiber 10 easily and smoothly with high precision.

In the preferred embodiment, as shown in Fig. 8, the passage hole 16 is structures with an ferrule for an optical connector. In this case, the tubular member 16 in the figure is a single core optical ferrule. This optical ferrule is an optical connector ferrule made of zirconium ceramics for an SC type optical connector (F04 type single core optical ferrule as stipulated in JIS C5973), and at the center, a fiber hole approximately several μm larger then the diameter of the bare fiber 10a is formed. When stored in the housing of the SC type optical connector, the optical connector ferrule has installed on its end a ferrule holder made of stainless steel, but because in this embodiment it is unnecessary, only the ferrule body is used. However, because the ferrule holder is convenient in terms of positioning, it is also possible to use a ferrule with a ferrule holder attached. In addition, the ferrule is mounted by an appropriate means at a center position of the holder 14, and the distal end of the lower end side of the ferrule is inserted so as to protrude a little from the holder 14.

In this case, the order for inserting the optical fiber 10 (specimen) into the holder 14 is as follows:

(1) The coating 10b is pealed off from the optical fiber 10, and the end becomes a bare fiber 10a.
(2) The end of the optical fiber 10 is inserted into the holder 14. As the end of the optical fiber 10 is guided by the ferrule's tapered guide part 16d with a chamfered optical fiber hole, and inserted into the small diameter part 16a.
(3) As it is further inserted, the end of the optical fiber 10 is exposed in the end of the ferrule. When the specified length of the exposed part is obtained, the coating 10b catches on the end of the ferrule, and cannot be inserted any further. In this position, the insertion of the optical fiber 10 is complete. Here, the specimen is inserted into the holder 14 by falling vertically under its own weight

In addition, for the sake of accurate measurement, correction of the degree of parallelization of the optical system correction, that is, the optical beams 21 and 22 and the reflected beams 21' and 22' is indispensable. In the apparatus of the present invention, this correction of the optical axis of the optical system is performed by the following method.

First is the method of correcting or calibrating the optical beams 21 and 22. This method registers with a regularly graduated measure perpendicular to the optical path of the optical beams 21 and 22 from the optical source 18 to the optical fiber 10, and while, for example, moving this graduated measure parallel to the above optical path by sliding it along the flat base, the interval between the optical beams 21 and 22 is continuously measured by measuring the intervals of the spots of the optical beam on the graduated measure. As a result, when the intervals between the above spots change and it is determined that the optical beams 21 and 22 are not parallel, the optical system is adjusted, and the adjustment of the optical axis is completed. This can be concretely explained using Fig. 6 and Fig. 9 as follows.

(1) First, the installation position of the optical source 18 (a helium neon laser) is adjusted so that the optical beam 21 is parallel to the bottom base in the radiation range from the beam splitter 24 to the optical fiber 10, and the emission angle of the optical source 18 is adjusted.
(2) Next, the angle of the prism 26 is adjusted so that the optical beam 22 is made parallel to the optical beam 21 in the radiation range from the prism 26 to the optical fiber 10.

At this time, as shown by the arrow in Fig. 9, by moving the graduated (base line) measure 71 its parallelness is confirmed.

Second is the method for correcting the observation value. This method electronically calculates the intervals $\Delta S$, $\Delta Z$ in the above Eq. 1 in calculation apparatus 2, and finds the curvature. This method is explained as follows.

If the measured object is straight, the interval $\Delta S$ of the reflected light 21', 22' is equal to the interval $\Delta Z$ of the incident optical beams 21, 22. There, as measured objects, a flat mirror and a straight optical fiber 10 are set in the measurement position, and the reflected light 21', 22' is projected into the receiver 28. The spots of the reflected light 21', 22' on the receiver 28 re electronically processed, and the interval between the reflected light 21', 22' is converted into a digital signal $\Delta Z$ bit. This signal $\Delta Z$ bit is stored in the memory apparatus 2 using the curvature of 0 as the standard interval, and the correction of the observation value is corrected.

When the curvature of optical fiber 10 having curvature is measured using this apparatus, the true measured value $\Delta S$ bit is obtained. In addition, when the $\Delta S$ bit is substituted into the above Eq. 1, the curvature or the radius of the curvature is calculated. In this method, the proportion can be found simply by comparing the number of bits, and because it is not necessary to convert the result of measurement to the actual length, this method has the advantage of making possible high precision measurement.

Because the apparatus of the present invention obtains the interval ΔS between the reflected beams 21' and 22' from a comparison of the measured value R and the threshold value T, observation results which are stable and without unnecessary noise are reliably obtained. In addition, it is portable, and because an appropriate input of necessary information via a display 2a and keyboard 2b is possible, it can be easily used on-site, and furthermore, it is possible to respond to unexpected trouble on-site. Further, correction of the optical system is simple. Moreover, with the object of making the apparatus more compact, the calculation apparatus which includes the display 2a and the keyboard 2b can be integrally installed in the measurer 1. In addition, the displayed contents of the display 2a consists of only the curvature of the optical fiber 10, and it is possible to simplify the display 2a.

In the above-mentioned embodiment, SM (Single Mode) type optical fiber is applied, however, GI (Grade Index) type optical fiber also can be applied. In this case, the diameter of the holder 14 is enlarged in compliance with the diameter of the GI type optical fiber.

**Claims**

1. An optical fiber curvature measuring apparatus radiating parallel light beams to the side surface of an optical fiber and measuring the curvature of the optical fiber based on the interval between reflected light, provided with:

   an optical source which emits said optical beams;
   a receiver which receives said reflected light;
   a calculation apparatus which performs calculation processing of the signal from said receiver;
   an output apparatus which outputs the result of the calculation of the calculation apparatus; and
   an input apparatus which inputs the data to the above computation apparatus,

     wherein

   said input apparatus inputs to said computation apparatus a threshold value of the optical intensity of said reflected light;
   said calculation apparatus compares the measured value of said reflected light with said threshold value based on said signal, finds the intervals between the intervals of the above measurement value corresponding to said threshold value, calculates the curvature of said optical fiber based on this interval, and outputs the result to said output apparatus.

2. An optical fiber curvature measuring apparatus according to Claim 1 wherein there are two optical beams reflected on the side surface of said optical fiber, and thereby, two peaks of optical intensity of said reflected light form, and further, said optical fiber is rotated on its axis of rotation, and based on the greatest value of said intervals of the intersections of said measured value and said threshold value, the curvature of said optical fiber is calculated.

3. An optical fiber curvature measuring apparatus according to Claim 2 wherein said calculation means determines that a measurement error has occurred when the above measured values corresponding to the above threshold values is not equal to four.

4. An optical fiber curvature measuring apparatus according to Claim 1 wherein the content output to said output apparatus comprises at least said measurement value, said threshold value, and the curvature of said optical fiber.

5. An optical fiber curvature measuring apparatus according to Claim 1 wherein said calculating apparatus automatically sets said threshold value based on the largest value or average value of said measured value.

6. An optical fiber curvature measuring apparatus according to Claim 2 wherein said calculating apparatus automatically sets said threshold value based on the largest value or average value of said measured value.

7. An optical fiber curvature measuring apparatus according to Claim 1 wherein for each peak of said measured value the intermediate value between the intersections of said beak and said threshold value is used as the standard value, and the interval of this standard value is the intervals between the standard value is made the interval of the above measured value.

**8.** An optical fiber curvature measuring apparatus according to Claim 2 wherein for each peak of said measured value the intermediate value between the intersections of said beak and said threshold value is used as the standard value, and the interval of this standard value is the interval of the intersections between said measured value and said threshold value.

**9.** An optical fiber curvature measuring apparatus radiating parallel light beams to the side surface of an optical fiber and measuring the curvature of the optical fiber based on the interval between reflected light, wherein:

the width of the diameter of the spots of said optical beams along the radial direction of said optical fiber is equal to or greater than a movable range along the radial direction of said optical fiber so as to cover the vertical vibration of said optical fiber when at least in the position at which said optical beams radiate said optical fiber when said optical fiber is rotated on its axis of rotation.

**10.** An optical fiber curvature measuring apparatus according to Claim 9 wherein the cross-section of the spot of said optical beam along the radial direction of said optical beams is flattened at least at the position at which the above optical beams radiate said optical fiber, and its long axis is along to the radial direction of said optical fiber.

**11.** An optical fiber curvature measuring apparatus according to Claim 9 wherein said optical beams are selected from semiconductor lasers or helium-neon lasers.

**12.** An optical fiber curvature measuring apparatus according to Claim 11 wherein the cross-section of the spot of said optical beam along the radial direction of said optical beams is flattened at least at the position at which the above optical beams radiate said optical fiber, and its long axis is along to the radial direction of said optical fiber.

**13.** An optical fiber curvature measuring apparatus according to Claim 10 provided with:

a first lens between the optical source for said optical beams and said optical fiber, and
a second lens between said optical fiber and the receiver for said reflected light,

wherein
the cross-section along the radial direction of said optical beams is flattened by said first lens, and the reflected light from said optical fiber is converged and focussed on said receiver by said second lens.

**14.** An optical fiber curvature measuring apparatus according to Claim 13 wherein said first lens is a convex cylindrical lens, and said second lens is a convex cylindrical lens.

**15.** An optical fiber curvature measuring apparatus radiating parallel light beams to the side surface of an optical fiber and measuring the curvature of the optical fiber based on the interval between reflected light provided with a holder wherein said optical fiber is installed in the measurement space formed in said apparatus, and this holder has a passage hole through which said optical fiber is guided, and this passage hole connected vertically the upper surface of said apparatus and said measurement space, and as a result, said optical fiber is inserted perpendicularly into said measurement space from the surface of said apparatus.

**16.** An optical fiber curvature measuring apparatus according to Claim 15 wherein the diameter of said passage hole on the side of said measurement space is larger than that of said optical fiber but smaller than that of the coating portion of said optical fiber, and on the side of said apparatus has a diameter larger than that of the coating portion of said optical fiber.

**17.** An optical fiber curvature measuring apparatus according to Claim 16 wherein said optical fiber installed in said holder can be rotated on its axis of rotation.

**18.** A correction method for an optical fiber curvature measuring apparatus radiating parallel light beams to the side surface of an optical fiber and measuring the curvature of the optical fiber based on the interval between reflected light, wherein:

said reflected light produced by said optical beams radiating to a flat mirror or a straight optical fiber are electronically converted, and this interval is used as the interval of the standard when curvature is 0.

**19.** A correction method for an optical fiber curvature measuring apparatus radiating parallel light beams to the side surface of an optical fiber and measuring the curvature of the optical fiber based on the interval between reflected light wherein a gradation measuring scale stands perpendicular to the above optical path, and while moving this measuring scale along said optical path, the parallelness is confirmed by measuring the interval between said optical beams, and then said optical beams are not parallel, the emission angle of said optical source and the optical system through which said optical beams transit is adjusted, and said optical beams are made parallel.

FIG.1

FIG.2

FIG.3

FIG.5

FIG.4A

FIG.4B

# FIG.6

FIG.7

FIG.8

FIG.9

## EUROPEAN SEARCH REPORT

**European Patent Office**

**Application Number**

EP 99 30 0867

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 016, no. 327 (P-1387), 16 July 1992 (1992-07-16) & JP 04 096005 A (FUJIKURA LTD), 27 March 1992 (1992-03-27) * abstract; figure * | 1,18 | G01B11/24 |
| A | GB 2 297 836 A (ROKE MANOR RESEARCH) 14 August 1996 (1996-08-14) * abstract; figure 1 * * page 1, paragraph 1 * * page 1, last paragraph - page 2, paragraph 1 * | 1,18 | |
| A | FR 2 718 521 A (CABLOPTIC SA) 13 October 1995 (1995-10-13) * abstract; claims 1,2; figures 1,2 * | 1,18 | |
| A | WO 98 59219 A (GREENAWAY ALAN HOWARD ;MCBRIDE ROY (GB); SECR DEFENCE (GB); BLANCH) 30 December 1998 (1998-12-30) * abstract; claim 1; figure 1 * * page 10, line 25 - page 11, line 23 * | 1 | |
| A | DD 238 855 A (OBERSPREE KABELWERKE VEB K) 3 September 1986 (1986-09-03) * the whole document * | 9,19 | TECHNICAL FIELDS SEARCHED (Int.Cl.7) G01B |
| A | US 4 859 861 A (MERSCH STEVE) 22 August 1989 (1989-08-22) * column 7, line 3 - line 22; figure 2 * | 1,19 | |
| A | US 4 101 197 A (KENT ALAN HUGH ET AL) 18 July 1978 (1978-07-18) * abstract * * column 2, line 17 - line 68; figure 1 * | 15 | |
| | -/-- | | |

The present search report has been drawn up for all claims

| Place of search | Date of completion of the search | Examiner |
|---|---|---|
| BERLIN | 3 March 2000 | Hylla, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent
Office

# EUROPEAN SEARCH REPORT

Application Number

EP 99 30 0867

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 198 480 A (SUMITOMO ELECTRIC INDUSTRIES) 22 October 1986 (1986-10-22) * abstract * * column 21, line 1 - line 32 * ----- | 15 | |
| | | | **TECHNICAL FIELDS SEARCHED** (Int.Cl.7) |

The present search report has been drawn up for all claims

| Place of search | Date of completion of the search | Examiner |
|---|---|---|
| BERLIN | 3 March 2000 | Hylla, W |

EPO FORM 1503 03.82 (P04C01)

| | | |
|---|---|---|
| **European Patent Office** | **LACK OF UNITY OF INVENTION**<br>**SHEET B** | **Application Number**<br>EP 99 30 0867 |

The Search Division considers that the present European patent application does not comply with the requirements of unity of invention and relates to several inventions or groups of inventions, namely:

1. Claims: 1-8, 18

    Optical fiber curvature measuring apparatus characterised by using an optical intensity threshold value to detect the interval between reflected light beams, and method of zero-curvature calibration.

2. Claims: 9-14, 19

    Optical fiber curvature measuring apparatus using parallel beams of a particular diameter and method of controlling parallelism of the beams.

3. Claims: 15-17

    Optical fiber curvature measuring apparatus provided with a special fiber holder inserting the fiber perpendicularly into the measurement space.

**EP 1 026 475 A1**

## ANNEX TO THE EUROPEAN SEARCH REPORT
## ON EUROPEAN PATENT APPLICATION NO.

EP 99 30 0867

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2000

| Patent document cited in search report | | Publication date | Patent family member(s) | | Publication date |
|---|---|---|---|---|---|
| JP 04096005 | A | 27-03-1992 | JP 2652461 B | | 10-09-1997 |
| GB 2297836 | A | 14-08-1996 | AU 4225796 A | | 22-08-1996 |
| | | | EP 0726446 A | | 14-08-1996 |
| | | | JP 8247741 A | | 27-09-1996 |
| | | | US 5633718 A | | 27-05-1997 |
| | | | ZA 9609654 A | | 16-08-1996 |
| FR 2718521 | A | 13-10-1995 | NONE | | |
| WO 9859219 | A | 30-12-1998 | NONE | | |
| DD 238855 | A | 03-09-1986 | NONE | | |
| US 4859861 | A | 22-08-1989 | AT 79947 T | | 15-09-1992 |
| | | | AU 605685 B | | 17-01-1991 |
| | | | AU 3231889 A | | 16-11-1989 |
| | | | CA 1300370 A | | 12-05-1992 |
| | | | DK 237089 A | | 17-11-1989 |
| | | | EP 0348607 A | | 03-01-1990 |
| | | | FI 892331 A | | 17-11-1989 |
| | | | GR 3005755 T | | 07-06-1993 |
| | | | JP 2019704 A | | 23-01-1990 |
| | | | JP 2049325 C | | 25-04-1996 |
| | | | JP 7081843 B | | 06-09-1995 |
| | | | MX 166456 B | | 11-01-1993 |
| | | | NO 891576 A | | 17-11-1989 |
| | | | NZ 228526 A | | 26-10-1990 |
| US 4101197 | A | 18-07-1978 | GB 1548864 A | | 18-07-1979 |
| EP 0198480 | A | 22-10-1986 | JP 1657919 C | | 21-04-1992 |
| | | | JP 3023854 B | | 29-03-1991 |
| | | | JP 61239137 A | | 24-10-1986 |
| | | | AU 579293 B | | 17-11-1988 |
| | | | AU 5609986 A | | 23-10-1986 |
| | | | CA 1261166 A | | 26-09-1989 |
| | | | DE 3681191 A | | 10-10-1991 |
| | | | DK 159986 A | | 16-10-1986 |
| | | | FI 861566 A,B, | | 16-10-1986 |
| | | | NO 861439 A,B, | | 16-10-1986 |
| | | | US 4714343 A | | 22-12-1987 |

EPO FORM P0459

For more details about this annex : see Official Journal of the European Patent Office, No. 12/82